## Europäisches Patentamt
## European Patent Office
## Office européen des brevets

(19)

(11) Veröffentlichungsnummer: **0 037 962**
**A2**

(12)

# EUROPÄISCHE PATENTANMELDUNG

(21) Anmeldenummer: 81102457.9

(22) Anmeldetag: 01.04.81

(51) Int Cl³: **C 08 F 246/00**, C 08 F 220/32

(30) Priorität: 08.04.80 AT 1884/80

(43) Veröffentlichungstag der Anmeldung: 21.10.81
Patentblatt 81/42

(84) Benannte Vertragsstaaten: BE CH DE FR GB IT LI NL SE

(71) Anmelder: Vianova Kunstharz Aktiengesellschaft,
A-8402 Werndorf (AT)

(72) Erfinder: Zima, Herbert, Dr., Eichenweg 7, A-8042 Graz
(AT)
Erfinder: Gossak, Kurt, Wöbling 10, A-8042 Graz (AT)

(74) Vertreter: Pitter, Robert, Dr. et al, Vianova Kunstharz
Aktiengesellschaft Postfach 191, A-8011 Graz (AT)

(54) **Verfahren zur Herstellung von Oxirangruppen aufweisenden Polymerdispersionen.**

(57) Die Erfindung betrifft Oxirangruppen aufweisende Polymerdispersionen Diese werden durch Mischpolymerisation von Vinyl und/oder Vinylidenverbindungen mit Partialestern von Di- oder Polypepoxidharzen und (Meth)-acrylsäure hergestellt.
Die Dispersionen vereinigen die Eigenschaften von Vinylpolymerisaten mit denen von Epoxidharzen und stellen ausgezeichnete Bindemittel für Lacke fur Metall, Leder und andere Substrate dar.

EP 0 037 962 A2

ACTORUM AG

*1750*
0037962

*Verfahren zur Herstellung von Oxirangruppen aufweisenden Polymer-*
*dispersionen.*

Die vorliegende Erfindung betrifft die Herstellung von Oxirangruppen aufweisenden Polymerdispersionen durch Mischpolymerisation von Vinyl- und/oder Vinylidenverbindungen mit Partialestern von Di- oder Polyepoxidharzen mit Acrylsäure oder Methacrylsäure.

Polymerdispersionen auf der Basis von Vinyl- und/oder Vinylidenverbindungen, sind dem Fachmann in großer Zahl seit langem bekannt, wobei zur Herstellung technisch anspruchsvoller Überzugsmittel hauptsächlich Acryl- und Methacrylmonomere eingesetzt werden.

Epoxidharze, vor allem solche auf Basis des 4,4'-Diphenylolpropans (Bisphenol A) sind aufgrund ihrer Eigenschaften wertvolle Rohstoffe für hochwertige Lackbindemittel. Es besteht daher seit langem der Wunsch, die positiven Eigenschaften dieser Verbindungsklassen gemeinsam bei der Formulierung von Überzugsmitteln für die Lackindustrie nutzbar zu machen.

So werden in der US-PS 2 954 538 bereits Dispersionen von wasserunlöslichen thermoplastischen Copolymeren, welche 1 bis 10 Molprozent Acrylsäure- oder Methacrylsäureeinheiten enthalten, beschrieben, welche in Mischung ein wasserlösliches oder wasserdispergierbares aliphatisches Polyepoxid enthalten. Wenn auch gemäß dieser Literaturstelle zur besseren Emulgierung der Epoxidharze Emulgierhilfsmittel herangezogen werden können, bleibt die Epoxidkomponente im wesentlichen auf die hydrophilen Typen dieser Verbindungsklasse beschränkt, mit welchen das gewünschte Eigenschaftsbild jedoch nicht erreicht werden kann.

In der US-PS 4 021 396 werden nach partieller Neutralisation mit Basen wasserlösliche Lösungspolymerisate oder Emulsionspolymerisate auf Acrylbasis, welche Anteile an Acryl- oder Methacrylsäureeinheiten aufweisen, beschrieben, welche mit Diepoxidharzen auf Basis von Bisphenol A umgesetzt werden, wodurch diese Verbindungen in

1750
0037962

eine wasserlösliche bzw. emulgierbare Form übergeführt werden. Diese Produkte enthalten natürlich keine freien Epoxidgruppen, durch welche eine Vernetzung des aufgebrachten Films erfolgen könnte.

Es wurde nun gefunden, daß Oxirangruppen aufweisende Polymerdispersionen, welche die Eigenschaften von Vinylpolymerisaten mit denen von Epoxidharzen in einem Produkt vereinen, erhalten werden können, wenn man als Ausgangsmaterialien neben den Vinyl- und/oder Vinylidenmonomeren Partialester von Di- oder Polyepoxidharzen mit Acryl- und/ oder Methacrylsäure zur Copolymerisation heranzieht. Es war überraschend, daß sich diese Partialester in einfacher Weise herstellen lassen, ohne daß dabei in bezug auf die polymerisierbaren Doppelbindungen mehrfunktionelle Produkte in wesentlichem Umfang entstehen.

Die vorliegende Erfindung betrifft demgemäß ein Verfahren zur Herstellung von Oxirangruppen aufweisenden Polymerdispersionen auf der Basis von Vinyl- und/oder Vinylidenverbindungen und Epoxidharzen, welches dadurch gekennzeichnet ist, daß man als Comonomeres neben den Vinyl- und/oder Vinylidenverbindungen 0,5 bis 70 Gew.-%, vorzugsweise 20 bis 50 Gew.-%, (bezogen auf die Gesamtmenge der Monomeren) eines Partialesters einer Di- und/oder Polyepoxidverbindung mit einem Epoxidäquivalentgewicht zwischen 150 und 500 und Acryl- und/oder Methacrylsäure, wobei der Partialester im Mittel eine mit einer der genannten Säuren umgesetzte Oxirangruppe aufweist, einsetzt.

Gegenüber den zum Stand der Technik gehörenden Produkten ergibt sich der besondere Vorteil der erfindungsgemäß hergestellten Polymerdispersionen durch die chemische Verknüpfung von Acrylcopolymeren und Epoxidharz, wodurch die sonst auftretenden Verträglichkeitsschwierigkeiten auch bei hohen Epoxidharzanteilen überwunden werden. Durch die vorhandenen freien Oxirangruppen weisen die Polymerdispersionen reaktive Stellen für eine chemische Vernetzung bei der Filmbildung auf. Durch die Möglichkeit Produkte mit hohem Molekulargewicht aufzubauen zeigen die daraus hergestellten Überzüge ausgezeichnete Beständigkeitseigenschaften gegenüber chemischen oder physikalischer Einflüssen.

Die Dispersionen können sowohl mit anionischer als auch mit kationischer Aufladung hergestellt werden und zeigen bei ausgezeichneter Dispersionsstabilität eine relativ leichte Entladbarkeit, d. h. Fällbarkeit, eine Eigenschaft, die für viele Anwendungszwecke von Vorteil ist.

Es war überraschend, daß die erfindungsgemäß als Comonomere eingesetzten Partialester aus Epoxidharzen und Acryl- und/oder Methacrylsäure nur geringfügige Anteile an - in bezug auf die Polymerisation - mehrfunktionellen Anteilen enthalten, sodaß die Herstellung von weitgehend koagulatfreien Dispersionen möglich ist.

Die für die Copolymerisation mit den Vinyl- und/oder Vinylidenmonomeren erfindungsgemäß eingesetzten Partialester werden durch Reaktion der Epoxidverbindung mit Acrylsäure und/oder Methacrylsäure in Anwesenheit eines Polymerisationsinhibitors und vorteilhafterweise eines tertiären Amins als Veresterungskatalysator bei 80 bis 120°C hergestellt. Als Polymerisationsinhibitoren werden die für diesen Zweck üblichen Verbindungen, wie Hydrochinon oder Hydrochinonmonomethyläther eingesetzt. Geeignete tertiäre Amine sind Dimethylbenzylamin, Triäthylamin u. a., wobei bei der Auswahl darauf zu achten ist, daß durch diese Substanzen die spätere Copolymerisation nicht gestört wird.

Als Diepoxidharze werden vorzugsweise solche auf der Basis von 4,4'-Diphenylolpropan (Bisphenol A) eingesetzt. Diese Verbindungen sind mit verschiedenen Epoxidäquivalenten im Handel erhältlich. Daneben können auch Epoxidverbindungen aliphatischer Natur eingesetzt werden, welche durch Umsetzung von Polyolen, Dicarbonsäuren u. a. mit Epichlorhydrin erhalten werden. Polyepoxidharze leiten sich z. B. von Phenolnovolaken ab. Eine Zusammenstellung für diese Klasse von Verbindungen gibt das Buch von H. LEE und K. NEVILLE, "Handbook of Epoxy Resins", Mc Graw-Hill Book Co, 1967. Für das vorliegende Verfahren werden Epoxidharze eingesetzt, deren Epoxidäquivalent zwischen 150 und 500 liegt.

1750
0037962

Die Mengenverhältnisse zwischen Epoxidverbindung und Acryl- und/oder Methacrylsäure werden so gewählt, daß die beiden Partner in etwa äquimolaren Mengen, d. h. in einem Molverhältnis von 1 Mol Säure zu 0,90 bis 1,05 Mol des Epoxidharzes zur Reaktion gelangen, sodaß die Partialester im Mittel eine mit einer der genannten Säuren umgesetzte Oxirangruppe aufweisen. Da die erfindungsgemäß verwendbaren Epoxidharze bei der Reaktionstemperatur meist niedrigviskose Flüssigkeiten darstellen, erübrigt sich in diesen Fällen die Mitverwendung eines Lösungsmittels. Selbstverständlich können inerte Lösungsmittel eingesetzt werden, doch soll ihr Anteil möglichst gering gehalten werden. Um eine optimale Steuerung der Reaktion zu gewährleisten, wird die Epoxidverbindung zusammen mit dem Veresterungskatalysator im Reaktionsgefäß vorgelegt und die (Meth)acrylsäure zusammen mit dem Inhibitor langsam zugegeben. Zur Erleichterung der Handhabung der so hergestellten Partialester werden diese nach Beendigung der Reaktion vorteilhafterweise in einem Teil der für die Herstellung der Polymerdispersion vorgesehenen Monomeren gelöst.

Die Herstellung der Polymerdispersion erfolgt in bekannter Weise durch Emulsionspolymerisation unter Verwendung von anionischen oder kationischen Emulgiermitteln, gegebenenfalls unter Mitverwendung nichtionischer Emulgatoren. Geeignete anionische Emulgiermittel sind beispielsweise Dodecylbenzolsulfonat, Natriumlaurylsulfat, Natriumlauryläthersulfat sowie Dodecyldiphenylätherdisulfonat oder Sulfo·succinate. Geeignete kationische Emulgiermittel sind 1-Hexadecyl-pyridiniumchlorid und Hexadecyltrimethylammoniumbromid. Als nichtionische Emulgatoren kann man u. a. polyäthoxylierte Octylphenole oder Nonylphenole mitverwenden.

Der Emulgatorgehalt der Dispersionen liegt zwischen 0,5 und 6 Gew.-%, vorzugsweise bei 1 bis 2,5 Gew.-%, bezogen auf die Gesamtmenge der Monomeren. Bei der Polymerisation werden die üblichen Initiatoren, wie Ammoniumperoxodisulfat, Kaliumperoxodisulfat oder Wasserstoffperoxid eingesetzt.

Als Vinyl- und Vinylidenverbindungen zur Herstellung der Polymerdispersionen werden vorzugsweise die Alkanolester der Acryl- oder Methacrylsäure, wie Methyl-, Äthyl-, Butyl-, 2-Äthylhexyl(meth)acrylat, die Amide der (Meth)acrylsäure verwendet. Daneben können auch aromatische Vinylverbindungen wie Styrol oder Vinyltoluol, Vinylester von Monocarbonsäuren wie Vinylacetat, Vinylpropionat sowie Dialkylester der Malein- oder Fumarsäure eingesetzt werden.

Die Menge der erfindungsgemäß als Comonomere zur Herstellung der Dispersionen eingesetzten Partialester liegt zwischen 0,5 und 70 Gew.-%, bezogen auf die Gesamtmenge der eingesetzten Monomeren. Die einsetzbare Menge hängt einerseits vom Molekulargewicht der Epoxidharze, andererseits von deren chemischen Aufbau ab. So können Partialester von aliphatischen Epoxidharzen leichter in größeren Mengen copolymerisiert werden, als solche auf Basis von Phenolglycidyläthern. Vorzugsweise beträgt die Menge der Partialester zwischen 20 und 50 %, da sich bei diesen Mengenverhältnissen die Eigenschaften der beiden Grundtypen in optimaler Weise ergänzen.

Das Verfahren erlaubt je nach Wahl der Emulgatoren die Herstellung anionischer oder kationischer Dispersionen, welche vielseitig als Beschichtungsmittel für Metalle, Leder, Textilien u. ä. eingesetzt werden können.

Die nachfolgenden Beispiele erläutern die vorliegende Erfindung, ohne sie in ihrem Umfang zu beschränken. Soweit nicht anders angegeben sind alle Mengenangaben Gewichtsteile bzw. Gewichtsprozente.

### Herstellung der Epoxidharz- (Meth)acrylsäure - Partialester

In einem mit Rührer, Rückflußkühler, Thermometer und Zutropftrichter ausgestattetem Reaktionskolben wird das Epoxidharz zusammen mit dem tertiären Amin (Veresterungskatalysator) auf die Reaktionstemperatur von 90°C erwärmt. Der Zutropftrichter wird mit der (Meth)acrylsäure und dem Inhibitor beschickt. Die Zugabe erfolgt innerhalb von 12 Stunden. Anschließend wird die Reaktionstemperatur weiter aufrechterhalten bis eine Säurezahl von weniger als 3 mg KOH/g erreicht ist.

Die Gesamtreaktionszeit beträgt üblicherweise 18 bis 20 Stunden. Während des Abkühlens wird der Partialester vorteilhafterweise in einem Teil der für die anschließende Copolymerisation vorgesehenen Monomeren, z. B. in einer Mischung von Styrol und Butylacrylat, gelöst, um die Handhabbarkeit des Produkts zu erleichtern.

Die Ausgangsmaterialien und Mengenverhältnisse, der in den Beispielen verwendeten Partialester sind in der Tabelle 1 zusammengefaßt.

Tabelle 1: Zusammensetzung der Partialester

| | EPOXIDHARZ Menge (g) / Typ[1] / Mol | DMBA [2] | ACS [3] (MG:72) | MACS [4] (MG:86) | HY [5] |
|---|---|---|---|---|---|
| A | 353 / I / 0,93 | 0,6 | --- | 86 | 0,46 |
| B | 327 / II / 0,93 | 0,6 | 72 | --- | 0,39 |
| C | 448 / III / 0,93 | 0,8 | --- | 86 | 0,46 |
| D | 355 / IV / 0,93 | 0,6 | --- | 86 | 0,46 |
| E | 598 / V / 0,93 | 0,9 | --- | 86 | 0,46 |
| F | 327 / II / 0,93 | 0,6 | 43,2 (0,6 Mol) | 34,4 (80,4 Mol) | 0,39 |

| [1] EPOXIDHARZ | BASIS | ÄQUIVALENTGEWICHT | |
|---|---|---|---|
| | | Lt. Prospekt | angen. Mittelwert |
| I | Bisphenol A | 186 – 192 | 190 |
| II | Bisphenol A | 172 – 178 | 175 |
| III | Bisphenol A | 230 – 250 | 240 |
| IV | aliphatisch (Glykol) [+] | 175 – 205 | 190 |
| V | aliphatisch (Glykol) [+] | 305 – 335 | 320 |

[+] $CH_2 - CH{-}CH_2{-}O{-}\left[-CH_2{-}\overset{R}{CH}{-}O{-}CH_2{-}\overset{R'}{CH}{-}O{-}\right]_n -CH_2{-}CH - CH_2$ (mit Epoxidgruppen an den Enden)

(bei IV: n = 3,0, bei V n = 5,6).

(2) Dimethylbenzylamin

(3) Acrylsäure

(4) Methacrylsäure

(5) Hydrochinon

1750
0037962

*Beispiele 1 - 5: Die für die Herstellung der Dispersionen gemäß
Beispiel 1 - 5 eingesetzten Materialien sind in Tabelle 2 zusammengefaßt.*

*Durchführung bei Beispiel 1 - 4 : In einem mit einem rührbaren Zulaufgefäß, Rückflußkühler, Thermometer und Inertgaszuleitung ausgestatteten Rührwerk werden die in Spalte A der Tabelle 2 angegebenen
Materialien vorgelegt. Im Zulaufgefäß werden gleichzeitig die in
Spalte B angegebenen Rohstoffe gemischt.*

*Man spült das Rührwerk mit Stickstoff und erhitzt die Vorlage auf
85 - 89°C. Bei dieser Temperatur läßt man die Emulsion aus dem Zulaufgefäß in 90 Minuten gleichmäßig zufließen.Schließlich wird 1
Stunde bei 90 - 94°C nachreagiert, abgekühlt und über ein feinmaschiges Sieb filtriert. Es resultieren stabile, feinteilige Dispersionen.*

*Durchführung  Beispiel 5 (kationische Dispersion)*
*Zur Herstellung einer kationischen Dispersion wird ein Rührwerk verwendet, das mit einem einfachen 1. Zulaufgefäß, einem rührbaren 2.
Zulaufgefäß sowie mit Rückflußkühler, Thermometer und Inertgaszuleitung ausgestattet ist. Im Rührwerk wird die Mischung (A) vorgelegt
und mit 10%iger Schwefelsäure auf pH 5 eingestellt.  In das 1. Zulaufgefäß wird die Mischung (B) eingefüllt und ebenfalls mit 10%iger
Schwefelsäure auf pH 5 eingestellt.*

*In das Zulaufgefäß 2. gibt man 42 Teile 30%iges Wasserstoffperoxid.
Zur Durchführung der Polymerisation wird der Inhalt des Rührwerkes
auf 85 - 87 °C erwärmt, mit Stickstoff abgedeckt und der Inhalt der
beiden Zulaufgefäße in 90 Minuten gleichmäßig bei 87°C zugegeben.
Nach Beendigung des Zulaufes wird innerhalb von 40 Minuten die
Temperatur auf 90°C erhöht. Man kühlt ab, filtriert durch ein Sieb
und erhält eine 25%ige stabile Dispersion.*

*Tabelle 2 : Rohmaterialansatz für die Dispersionen*

| | 1 A | 1 B | 2 A | 2 B | 3 A | 3 B | 4 A | 4 B | 5 A | 5 B |
|---|---|---|---|---|---|---|---|---|---|---|
| H$_2$O | 320 | 220 | *Wie Beispiel 1* | *Wie Beispiel 1* | 330 | 220 | 220 | 389 | 489 | 177 |
| DDBS | 8,4 | 2,7 | | | 8,4 | 2,7 | 8,4 | 2,7 | --- | --- |
| HDPC | --- | --- | | | --- | --- | --- | --- | 2 | 0,8 |
| APDS | 0,3 | 2,0 | | | 0,3 | 2,0 | 0,3 | 2 | --- | 0,1 |
| EOP | --- | --- | | | --- | --- | --- | --- | 2,7 | 1,9 |
| ST | 7,4 | 66,1 | | | --- | --- | --- | --- | 7,2 | 64 |
| EAC | --- | --- | | | 13 | 119 | --- | --- | --- | --- |
| BAC | 11,1 | 99,1 | | | --- | --- | --- | --- | 4,8 | 42,6 |
| MMA | --- | --- | | | 7 | 62 | --- | --- | --- | --- |
| MAD | 1,6 | 15,5 | | | --- | --- | --- | --- | 1,1 | 10,7 |
| DBF | --- | --- | | | --- | --- | 8 | 71 | --- | --- |
| VAC | --- | --- | | | --- | --- | 12 | 110 | --- | --- |
| PE.A | (1) 23,3 | (1) 212,7 | | | (2) 23 | (2) 213 | (3) 23 | (3) 213 | (1) 15,2 | (1) 137,4 |
| PE.B | --- | --- | (1) 23,2 | (1) 121,7 | --- | --- | --- | --- | --- | --- |
| FK % | 43 | | 43 | | 43 | | 45 | | 25 | |

Erklärung der Abkürzungen in Tabelle 2:

| | |
|---|---|
| H$_2$O | :Destilliertes oder deionisiertes Wasser |
| DDBS | : Dodecylbenzolsulfonat |
| HDPC | : 1-Hexadecyl-pyridiniumchlorid |
| ADPS | : Ammoniumperoxodisulfat |
| EOP | : Polyäthoxyliertes Octylphenol (16 Mol Äthylenoxid) |
| ST | : Styrol |
| EAC | : Äthylacrylat |
| BAC | : Butylacrylat |
| MMA | : Methylmethacrylat |
| MAD | : Methacrylamid |
| DBF | : Dibutylfumarat |
| VAC | : Vinylacetat |

*PE.A , PE. B : Partialester A bzw. B*

> *(1) gelöst 74%ig in ST/BAC (1:1)*
>
> *(2) gelöst 74%ig in MMA*
>
> *(3) gelöst 74%ig in VAC*

*Die Menge des als Lösungsmittel benützten Monomeren ist in den Rezepturen der Tabelle 2 berücksichtigt.*

Patentansprüche :

1. Verfahren zur Herstellung von Oxirangruppen aufweisenden Polymerdispersionen auf der Basis von Vinyl- und/oder Vinylidenverbindungen und Epoxidharzen, dadurch gekennzeichnet, daß man als Comono-meres neben den Vinyl- und/oder Vinylidenverbindungen 0,5 bis 70 Gew.-%, vorzugsweise 20 bis 50 Gew.-%, (bezogen auf die Gesamtmenge der Monomeren) eines Partialesters einer Di- und/oder Polyepoxidverbindung mit einem Epoxidäquivalentgewicht zwischen 150 und 500 und Acryl- und/oder Methacrylsäure, wobei die Partialester im Mittel eine mit einer der genannten Säuren umgesetzte Oxirangruppe aufweisen, einsetzt.

2. Verfahren nach Anspruch 1, dadurch gekennzeichnet, daß als Partialester solche von Epoxidharzen auf Basis von 4,4'-Diphenylolpropan eingesetzt werden.

3. Verfahren nach den Ansprüchen 1 und 2, dadurch gekennzeichnet, daß die Polymerdispersion in Gegenwart von kationischen oder anionischen Emulgatoren, gegebenenfalls unter Verwendung untergeordneter Mengen nichtionischer Emulgatoren hergestellt wird.

4. Verfahren nach den Ansprüchen 1 bis 3, dadurch gekennzeichnet, daß die Partialester in den für die Herstellung der Dispersion vorgesehenen Comonomeren oder einem Teil derselben gelöst werden.